# EUROPEAN PATENT SPECIFICATION

(11) **EP 0 710 374 B1**
(45) Date of publication and mention of the grant of the patent: **19.04.2000**
(21) Application number: 94923401.7
(22) Date of filing: 30.06.1994
(51) Int. Cl.: G06F 3/16, H04N 1/00

(54) **APPARATUS FOR ADDING MODEM CAPABILITIES TO A COMPUTER SYSTEM EQUIPPED WITH A DIGITAL SIGNAL PROCESSOR**
ANORDNUNG ZUM ZUFÜGEN EINER MODEMFUNKTION AN EIN MIT EINEM DIGITALEN SIGNALPROZESSOR AUSGESTATTETEN COMPUTERSYSTEM
APPAREIL POUR AJOUTER DES FONCTIONS DE MODEM SUPPLEMENTAIRES A UN SYTEME INFORMATIQUE EQUIPE D'UN PROCESSEUR DE SIGNAUX NUMERIQUES

(30) Priority: 19.07.1993 US 94491
(43) Date of publication of application: 08.05.1996
(73) Proprietor: Compaq Computer Corporation, Houston Texas 77070 (US)
(72) Inventor: MURRAY, David, E., Tomball, TX 77375 (US)
(74) Representative: Brunner, Michael John
(86) International application number: US9407715
(87) International publication number: WO9503571

(56) References cited:
- EP-A- 0 536 487
- WO-A-88/06824
- WO-A-93/02412
- CHIP, no.3, March 1989, WURZBURG DE pages 62 - 64, XP119319 FRANK HEGER 'Revolution in der Datenfernübertragung'
- SPEECH TECHNOLOGY, vol.3, no.1, August 1985, NEW YORK US pages 86 - 88 MARTIN ET AL. 'TI-Speech'
- INSTRUMENTS AND CONTROL SYSTEMS, vol.58, no.8, July 1985, RADNOR US pages 53 - 56 READINGER ET AL. 'Voice I/O improves productivity...'
- ELECTRONIC ENGINEERING, vol.56, no.690, June 1984, LONDON GB page 19 'New board provides voice I/O for PCs'
- ANT NACHRICHTENTECHNISCHE BERICHTE, no.9, April 1992, BACKNANG DE pages 120 - 126 EIBENSTEIN ET AL. 'Festbildübertragung im ISDN'
- RESEARCH DISCLOSURE, N.34108, September 1992, XP320019 'Personal computer feature card secondary bus'

## Description

The present invention relates to an apparatus for upgrading a computer system equipped with a digital signal processor to include modem and facsimile functions.

Computer systems are generally designed to include an input/output (I/O) bus coupled to one or more connectors or slots to allow the computer system to be upgraded by adding optional capabilities. The optional capabilities or functions are typically incorporated onto a separate printed circuit board or option card. The option card includes a connector which plugs into a slot on the I/O bus to electrically couple the circuitry on the option card to the computer system. One such optional function is a sound board, such as the Soundblaster by Creative Labs, Inc., while another is a modem or fax/modem board. The Soundblaster option includes audio processing capability for interfacing the computer to a variety of peripherals and functions, such as a joystick and stereo sound for computer games, musical synthesis and a CD ROM.

At the heart of the sound board is often a powerful numeric processor, such as a digital signal processor (DSP), which can perform frequency modulation synthesis for the various functions of the sound board. The DSP typically performs signal processing used for a variety of multimedia applications, such as electronic data processing, high precision servo control, graphics, various capabilities for work stations, robotics, image processing, process control, real time simulation and instrumentation, speech recognition and synthesis, and telecommunication capabilities such as PBX, modems and facsimiles (faxes). For purposes of simplification, modem functions discussed hereinafter are assumed to include the capability to handle fax information, since the communication protocol is similar.

High speed modem systems are also typically incorporated onto an option card and usually include a "data pump" for supporting the various protocols of modem communication, such as the V.22, V.22bis, V.32 and V.32bis protocols recommended by the International Telegraph and Telephone Consultative Committee (CCITT). The data pump itself typically includes a DSP for performing modulation, demodulation and echo cancellation and a coder-decoder (CODEC) for performing analog to digital (A/D) and digital to analog (D/A) conversion. Analog signals from the phone line are digitized by the CODEC, and then demodulated by the DSP to extract the original digital data sent by an external device. This procedure is reversed for data transmitted by the modem to the external device.

The data pump is coupled to the phone line through a data access arrangement (DAA), which electrically isolates the modem from the phone line to control emissions of electro-magnetic interference/radio frequency interference (EMI/RFI) as required by the Federal Communications Commission (FCC). The DAA also typically isolates the received from the transmitted analog signals, and develops a digital ring signal to inform the computer system to answer. The DAA receives signals from the phone line through a telephone jack, such as an RJ11C used for standard telephones. Other support logic is typically included to interface the modem to the computer system, such as a microcontroller for establishing a communications link, controlling the sequence of events to originate or answer a call, and to transmit or receive digital data from the computer system through a universal synchronous receiver transmitter (UART) across the I/O bus. The microcontroller also typically performs error correction procedures, such as according to the V.42 protocol recommended by the CCITT, as well as compression/decompression procedures, such as according to the V.42bis protocol recommended by the CCITT.

A significant disadvantage of the prior art option cards requiring complex numeric operations offered for computer systems is that a user must pay for multiple DSPs, one for each additional option. An integrated card incorporating multiple functions including a modem might appear to be desirable, but there are several disadvantages. First, even though only a single DSP would be required, a combination card would be more expensive than the cards in present use. Those persons requiring only audio functions would be forced to purchase the modem components, defeating the purpose of saving cost.

Furthermore, an integrated modem raises problems when shipping to foreign countries, such as Germany. An extensive qualification process is required for any modem shipped to a foreign country, which usually takes about six months to complete. The qualification process must be performed for any electrical device attachable to phone lines, such as modems, and includes anything electrically integrated to the modem. The qualification process must be performed again if any changes are made, including non-modem changes, to a device attached to the phone lines. Those persons in foreign countries only needing audio functions but forced to purchase an integrated modem would also be forced to wait until the qualification process was complete to use the new functions, even if they do not intend to use the modem.

It is therefore desirable to provide an optional modem apparatus to upgrade a computer system to include modem capability using a DSP already provided in the computer system or on an option card.

SPEECH TECHNOLOGY, vol. 3, no. 1, August 1985, New York, US, p. 86-88: Martin et al.: "TI-Speech" discloses a speech card that plugs into an option slot in a PC chassis, and an optional piggyback board which interfaces to single telephone lines for initiating and receiving telephone calls. The speech card incorporates a digital signal processor (DSP) for performing speech generation and recognition functions. The DSP has its own program RAM. It executes programs independently of, and concurrently with, PC program execution. Additional memory is mapped into PC memory and is dual ported. Data communication to the PC is over an 8-bit data bus which is connected directly to the PC internal data bus and is controlled by the PC write and read strobes.

According to the present invention there is provided an option card for coupling to a an I/O bus slot of a computer system, said option card comprising:
means for interfacing with the I/O bus slot for transferring data;
a digital signal processor coupled to said interfacing means for performing a first function;
a daughter board connector; and
a daughter board removably connected to said daughter board connector for adding to said option card a second function characterised in that;
said second function is unrelated to said first function, and includes modem and facsimile capabilities, in that said daughter board comprises:
a CODEC for coupling by said daughter board connector to said digital signal processor;
a data access arrangement coupled to said CODEC;
a phone jack coupled to said data access arrangement for coupling to a phone line; and
   wherein said digital signal processor interfaces with said data access arrangement through said CODEC to perform said second function in cooperation with said daughter board.

The daughter board includes a CODEC, a DAA and a phone jack to upgrade the computer system to include modem and fax capabilities when installed, where the DAA is preferably compatible with the public switched telephone network (PSTN) interface.

A driver routine or software program used for controlling the operations associated with the daughter board may be provided either on a read only memory (ROM) incorporated on the option card, or may preferably be downloaded to the card and stored in random access memory (RAM) incorporated on the option card. For example, modem software could be downloaded into a RAM chip located on the option card for access by the DSP. The RAM option is preferable since the RAM is normally already present to hold software for the various other functions on the option card. Thus, a sound board with an optional modem daughter board installed performs both audio and modem functions using a single DSP. Foreign qualification procedures would only be required if and when the daughter board modem is purchased.

The invention also includes a computer system including an option card according to the invention, said computer system including a host bus, an I/O bus and an I/O bus slot and a bus controller coupled between said host bus and said I/O bus for interfacing said host bus to the I/O bus, wherein said option card interfacing means is coupled to said I/O bus slot and operates as a slave to the computer system bus controller for transferring data between said option card and the computer system host bus.

The invention also includes a computer system, comprising:
a host bus;
an I/O bus including I/O slots for receiving option cards;
a digital signal processor, said digital signal processor being coupled either to said host bus or to said I/O bus;
means coupled between said host bus and said I/O bus for controlling data transfer between said host and I/O buses; and
an option card not including a digital signal processor, said option card interfacing with a said I/O slot for coupling over said I/O bus to said digital signal processor for performing option card functions requiring the use of said digital signal processor.

The DSP may be provided on the system board and coupled to one of the I/O bus or the host bus. In either case, operation is similar. An option card, such as a modem card including the DAA and CODEC logic, is provided for connection to the I/O slot. Software is loaded into main memory for controlling the modem and fax functions. The CODEC logic in this embodiment includes logic for transferring its data across the I/O bus as controlled by the CPU executing modem software. The data transferred to and stored in memory is the "raw" digitized analog signals converted by the CODEC, which has yet to be demodulated and otherwise processed by the DSP.

The processing by the DSP is required to retrieve the original data sent by the external device. The modem software informs the DSP that the data has been received from an external device so that the DSP can then process the data. The DSP retrieves the raw data from the memory and provides the redeveloped original data to the memory as an output. For data to be transmitted by the modem, the DSP modulates the digital data by retrieving original data from the memory and returning modulated data to the memory and informs the host CPU, and the host CPU transfers the modulated data from the memory to the CODEC on the modem. It is noted that the microcontroller and UART, typically required on standard modems, are not necessary.

In either of the preferred embodiments, it is appreciated that a single DSP processor is used for multiple functions including the modem and fax capabilities. Furthermore, the international qualification process need only be performed for the modem card or daughter board.

A better understanding of the present invention can be obtained when the following detailed description of the preferred embodiment is considered in conjunction with the following drawings, in which:
Figure 1 is a simplified block diagram of a computer system with an optional modem card according to prior art installed in a slot on the I/O bus;
Figure 2 is a simplified block diagram a computer system according to the present invention including an optional audio sound board card installed in the I/O bus, and a daughter board installed on the sound board card to add modem and fax capabilities; and
Figure 3 is a computer system according to an alternative embodiment of the present invention, incorporating a DSP with audio capabilities on the system board.

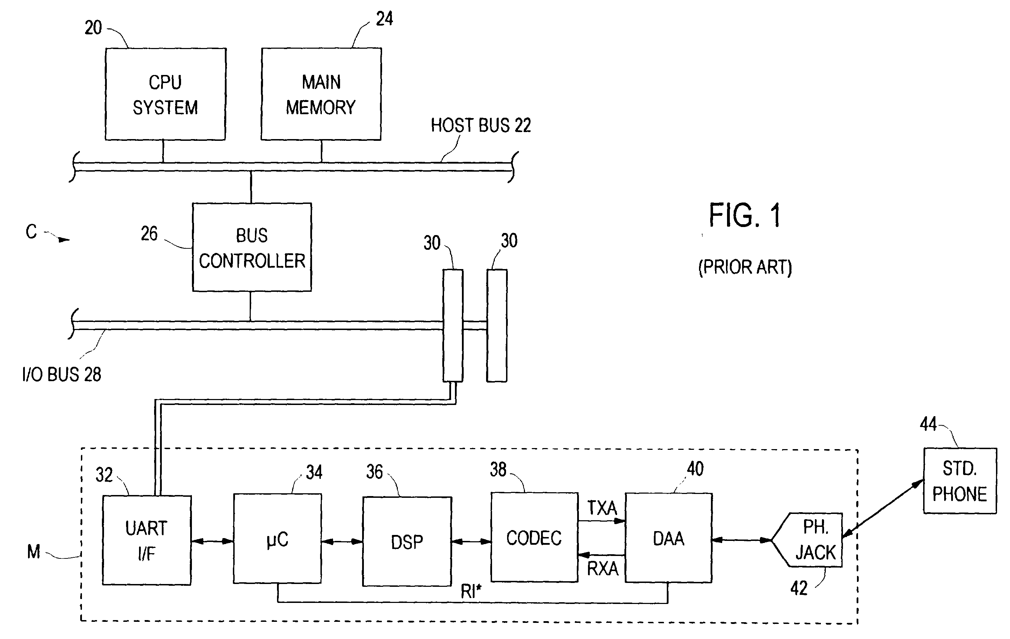

Referring now to Figure 1, a simplified block diagram of a high speed modem M according to prior art is shown coupled through an I/O bus 28 of a computer system C. The computer system C includes a central processing unit (CPU) system 20 coupled to a host bus 22 for interfacing the CPU system 20 to a memory array, otherwise referred to as the main memory 24. The host bus 22 is coupled to the I/O bus 28 through a bus controller 26, which is preferably compatible with the Industry Standard Architecture (ISA) or the Extended ISA (EISA) bus. The bus controller 26 allows the CPU system 20 to control input/output (I/O) operations to the I/O bus 28 to transfer and receive data to and from the modem M as controlled by appropriate modem software loaded into the main memory 24. The bus controller 26 includes control and data transfer capabilities, where data transfer would typically occur through separate buffers and/or transceivers as known to those skilled in the art. In the preferred embodiment, the host computer system C is compatible with the IBM PC/AT architecture, although other types of computer systems are contemplated. Many other functional blocks and much of the control and support logic associated with each of the included components are not shown for purposes of simplification.

The I/O bus 28 preferably includes a plurality of connectors or slots 30 for interfacing the computer system C with various optional capabilities and functions such as modems, audio cards, video controllers and floppy or hard disk controllers. Only two slots 30 are shown although a typical computer system might include more than two. As shown in Figure 1, one of the I/O slots 30 is connected to a connector 31 of the high speed modem M, which is used to interface the computer system C to an external device (not shown) through a standard telephone line 44. The modem M preferably includes a UART support chip 32 for converting serial data received from the external device by the modem M to parallel data transferred on the I/O bus 28, and for converting parallel data from the computer system C to serial data to be transmitted by the modem M to the external device. The UART 32 is connected to the connector 31 and a microcontroller 34 primarily through a serial interface for transferring data. Other connections might also be made among the various components, such as parallel interfaces for control and configuration purposes, but these are not shown for purposes of simplicity.

The UART 32 provides a variety of functions to the modem M, including communications to the computer system C, clock controls, configurable registers and power down control for the microcontroller 34. The UART 32 serves as a bus slave to the CPU system 20 for data transfers occurring through the bus controller 26. The UART 32 is typically an application specific integrated circuit (ASIC), but could instead be constructed of discrete components. The microcontroller 34 is typically an embedded controller, and in the preferred embodiment, is a 68302 integrated multiprotocol processor, manufactured by Motorola, Inc. The microcontroller 34 performs error correction procedures on the data received from the external device, where these procedures preferably conform to the V.42 recommendations by CCITT. The microcontroller 34 may also perform data compression/decompression procedures, where these procedures preferably conform to the V.42bis recommendations by CCITT.

The microcontroller 34 preferably communicates with a digital signal processor (DSP) 36, which is typically part of a modem data pump chip set supporting various protocols of modem communication, such as the V.32bis protocol for full duplex operation at up to 14,400 bits per second (bps). The chip set typically includes a coder-decoder (CODEC) 38, which provides analog to digital (A/D) and digital to analog (D/A) conversion for interfacing the DSP 36 to a data access arrangement (DAA) 40.

The DAA 40 is connected to the standard telephone line 44 through a phone jack, such as an RJ11 type phone jack. It is understood that many different kinds of phone lines or other transmission media are contemplated, so that the phone jack 42 and DAA 40 would be configured to be compatible with whatever phone line means or transmission media is being used. The present invention is not limited by any particular type of transmission media, phone jack or DAA, so that those shown are used merely for purposes of illustration.

In general, the DAA 40 serves to isolate the modem M from the telephone line 44 to meet FCC or national regulations for the control of EMI/RFI interference. Qualification procedures are intended to measure this interference to allow only those systems transmitting below a maximum allowable level to be connected to the phone line. The DAA 40 also serves to separate received data from the phone line onto a signal RXA, and to transmit data from a signal TXA to the phone jack 42. The DAA 40 also preferably detects the phone ringing and asserts a digital signal RI*, which is detected by the modem software operating on the computer system C. An asterisk at the end of a signal name denotes negative digital logic, where the signal is considered asserted when low. The computer system C would normally respond to the phone ringing by instructing the microcontroller 34 to answer the phone to begin communications. Data being received by the modem from an external device is filtered and provided in analog form to the CODEC 38 on the RXA signal. Similarly, data being transmitted by the modem M is provided from the CODEC 38 to the DAA 40 on the TXA signal, which is then asserted by the DAA 40 on the phone line. The CODEC 38 digitizes analog data from the RXA signal for processing by the DSP 36, and converts digital data from the DSP 36 to analog format onto the TXA signal. Data is preferably transferred serially between the DSP 36 and the CODEC 38.

The DSP 36 generally modulates data from the computer system C for transmission on the phone line and demodulates data from the phone line to extract the original digital data sent from the external device. The DSP 36 also preferably performs echo cancellation to cancel signals echoed back to the modem M due to the transmitted signal. The microcontroller 34 establishes a communication link between the modem M and the external unit when commanded by the modem software. To establish a communication link, the microcontroller 34 directs the proper sequence of these signals to either originate or answer a telephone call.

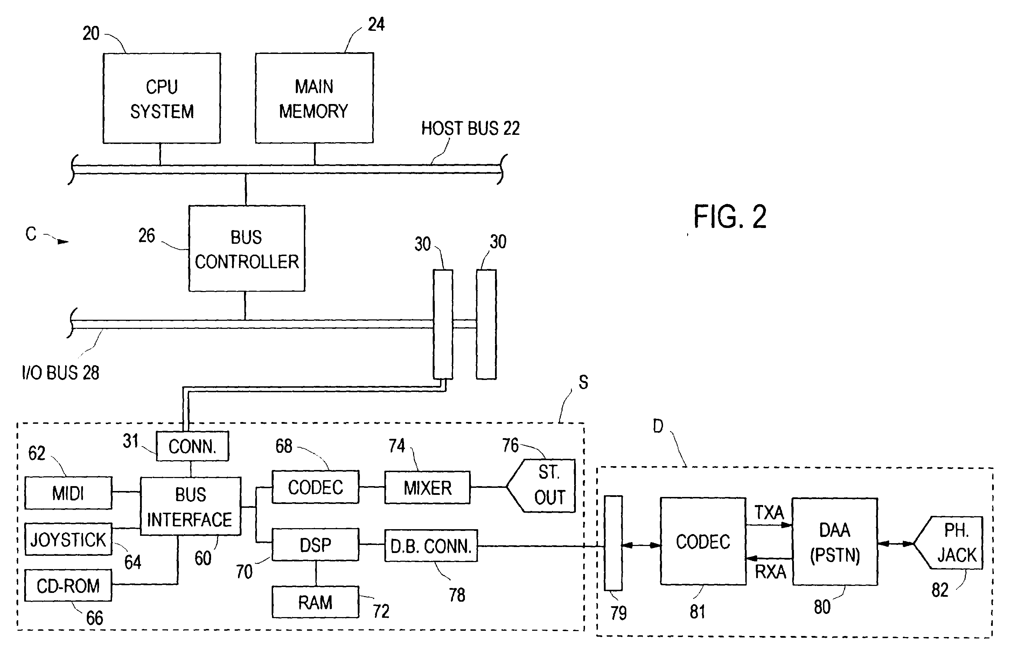

Referring now to Figure 2, the computer system C is shown connected to an optional sound board S which is implemented according to the present invention. It is understood that a sound board is used for illustrative purposes only, and that other types of optional cards are contemplated which include a DSP or DSP capabilities. Similar elements as those shown in Figure 1 assume identical reference numerals. A slave bus interface 60 of the sound board S is coupled to an I/O slot 30 through a connector 31 for interfacing the sound board S to the computer system C. The sound board S is typically coupled to various functions, such as a CD ROM through a CD ROM connector 66, to a joystick through a joystick connector 64 and to music apparatus through an MIDI connection 62. The bus interface 60 is also connected to a CODEC 68 and to a DSP 70, which typically performs frequency modulation synthesis for the functions of the sound board S. The sound board S includes a stereo output connector 76, which is connected through a mixer 74 to the CODEC 68.

In one embodiment, the DSP 70 is the DSP3210 manufactured by AT&T Microelectronics, which includes advanced capabilities including those functions typically performed by the microcontroller 34 in a standard modem. These functions include error correction on data received from the phone line from the external device, data compression and decompression functions as well as the functions involved in establishing and controlling modem communications. In another embodiment, the DSP 70 is the Motorola DSP56002 by Motorola, Inc., although additional interface logic (not shown) is required as known to those skilled in the art. It is noted, however, that the present invention is not limited by any particular DSP, so that a microcontroller similar to the microcontroller 34 could also be included on the sound board S if the DSP 70 is the same as the DSP 36.

A RAM memory 72 is preferably included and coupled to the DSP 70 for storing the various device drivers or software for controlling the functions performed by the sound board S. The RAM 72 is also used to store appropriate software to control the operation of another function or set of functions requiring the use of the DSP 70, although not related to the functions of the sound board S. The other software is preferably downloaded from the computer system C. The second, unrelated functions are associated with modem capabilities, where modem software is downloaded into the RAM 72. Alternatively, the modem software may be incorporated into a read only memory (ROM) device (not shown) installed on the sound board S and coupled to the DSP 70 in place of the RAM 72.

In the preferred embodiment, the sound board S preferably includes a connector 78 coupled to the DSP 70 for receiving a daughter board D upgrading the computer system C to include modem and fax capabilities. In particular, the daughter board D includes a compatible connector 79 for coupling to the daughter board connector 78, a CODEC 81 coupled to the connector 79 and a PSTN interface DAA 80 coupled to the CODEC 81. The daughter board D also includes a phone jack 82 coupled to the DAA 80, where the phone jack 82 is similar to the phone jack 42. Data received from an external device through the phone jack 82 is converted by the DNA 80 to the appropriate analog data and provided to the CODEC 81. The CODEC 81 converts the analog data to the appropriate digital format and provides this data to the DSP 70. The DSP 70 processes the data and transfers the data to the computer system C through the bus interface 60. The bus interface 60 acts as a slave to the CPU system 20 and converts the serial data from the DSP 70 to the proper parallel format for transfer to the main memory 24, and vice versa. As described previously, this procedure is generally reversed for data transmitted by the computer system C to an external device.

It can therefore be appreciated that the sound board S equipped with the modem daughter board D performs all audio and modem functions using the single DSP 70 mounted on the sound board S. Thus, a single DSP is used to perform the operations of two unrelated functions. Those requiring only audio functions may purchase the sound board S alone and not be subject to wait for foreign qualification procedures. Those requiring modem and fax functions may upgrade the sound board S with the relatively inexpensive daughter board D, which allows full modem and fax capabilities to be added. Another DSP is not required. As the daughter board D is the only portion requiring foreign qualification procedures, changes to the sound board S can be made more easily and previously qualified daughter boards D used.

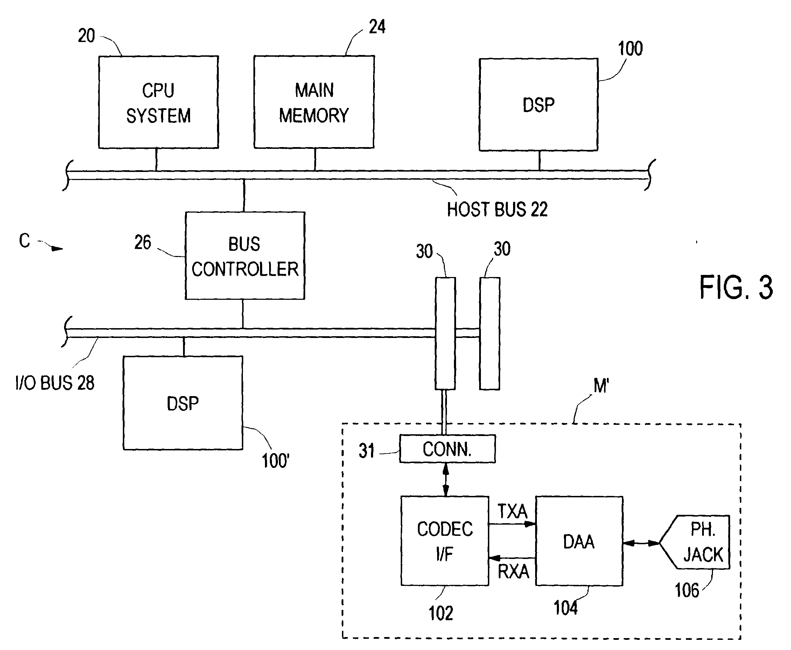

Referring now to Figure 3, a computer system C' is shown, which is implemented according to an alternative embodiment of the present invention. Similar components again assume identical reference numerals. The computer system C' preferably includes the CPU system 20, the main memory 24 connected to the host bus 22 and the I/O bus 28 coupled through the bus controller 26. Additionally, a DSP 100 is connected to the host bus 22 to perform various functions required by the computer system C'. In this case, the DSP 100 is located centrally for access by the CPU system 20 and also by I/O options installed on the I/O bus 28 through the bus controller 26. Alternatively, the DSP 100 is coupled to the I/O bus 28, which is shown as DSP 100'. Operation of the DSP 100' will not be described in detail since it is very similar to the operation of the DSP 100, except that the DSP 100' indirectly accesses the host bus 22 rather than directly, as known to those skilled in computer design. In particular, the CPU system 20 accesses the DSP 100' by executing a cycle to the I/O bus 28 through the bus controller 26, and the DSP 100' accesses the CPU system 20 and the main memory 24 in a similar manner. Otherwise, operation is the same. Thus, the bus controller 26, as well as other known and common system components not shown, allow ready access between the host and I/O buses 22 and 28. It is noted that only one DSP, the DSP 100, or the DSP 100', would be required in a given computer system.

Again, the DSP 100 is the DSP3210 by AT&T Microelectronics, which incorporates capabilities typically performed by the microcontroller 34 in a standard modem as well as the capabilities for the audio functions, which may typically be found on a sound board. Alternatively, the DSP 100 is the Motorola DSP56002. As before, the modem functions include error correction on data received from the phone line from the external device, data compression and decompression functions as well as the functions involved in establishing and controlling modem communications. The DSP3210 can perform these functions, thereby freeing up the CPU system 20 to perform other tasks necessary for the computer system C'. Alternatively, the modem functions could be performed by the CPU system 20 since the data is conveniently accessible in the main memory 24.

The computer system C' is shown connected to a card M', which is preferably a partial modem card similar to the partial modem daughter board D. The card M' is preferably an option card including a connector 31 for coupling to one of the I/O slots 30 of the I/O bus 28. The card M' is added to upgrade the computer system C' to include modem and fax capabilities using the DSP 100. The I/O bus 28 is thus coupled to a CODEC interface (I/F) 102, which performs similar functions as the CODECs 38 and 68, but which also includes appropriate support logic for asserting its digitized analog data on the I/O bus 28. The additional support logic preferably includes serial/parallel conversion and bus slave or master logic.

The card M' includes a DAA 104 coupled to the CODEC I/F 102, where the DAA 104 is also coupled to a phone jack 106. The phone jack 106 is similar to the phone jacks 42 or 82. Appropriate software is loaded into the main memory 24 to control modem and fax functions and data transfers between the card M' and the main memory 24. In this manner, data received from the phone lines is transferred through the phone jack 106 to the DAA 104 and converted to appropriate analog format on the RXA signal to the CODEC I/F 102. The CODEC I/F 102 transmits the data to main memory 24 as controlled by the CPU system 20 executing the modem software. It is noted that the CODEC I/F 102 transfers digitized analog data on the I/O bus 28 rather than the actual digital data, since the CODEC functions are separated from the DSP functions across the I/O bus 28. The CPU system 20, as controlled by the modem software, informs the DSP 100 that data has been received from the card M', and the DSP 100 then processes the received data to the digital data usable by the computer system C'. In particular, the DSP 100 retrieves the received data from the main memory 24, processes the data, and then stores the processed data back into the main memory 24. The CPU 20 may retrieve the data processed by the DSP 100 for further processing.

In a similar manner, data is placed into the memory 24 by the CPU 20 for transmission to an external device. The DSP 100 retrieves the data, processes or modulates the data to the appropriate form for transmission and places the modulated data back into the main memory 24. Then, the modulated data is transferred through the I/O bus 28 to the CODEC I/F 102, typically by the CPU 20 as controlled by modem software. This data is transmitted on the TXA signal to the DAA 104, which is then transmitted on to the phone lines through the phone jack 106 to the external device. In this manner, the main memory 24 preferably provides the memory and storage for the modem software, the received or transmitted digitized analog data and the converted to actual digital data by the DSP 100. Also, raw or modulated data is typically transferred between the main memory 24 and the card M' across the host and I/O busses 22, 28.

The central location of the DSP 100 allows convenient access by any logic in the computer system C' or coupled to the computer system C' through the I/O bus 28. In the embodiment shown in Figure 3, the computer system C' is upgraded to include modem and fax capabilities by purchasing a relatively inexpensive card M'. Again, a duplicate DSP need not be purchased.

It can now be appreciated that a computer system implemented according to the present embodiment includes a DSP processor to perform certain functions, such as those functions needed by audio applications, but which is also used by an optional modem board to upgrade the computer system to include modem and fax capabilities. In this manner, a single DSP chip is used rather than multiple DSPs. Furthermore, a user in a foreign country not requiring modem functions would not be subject to the qualification process, since the modem devices for interfacing to the phone lines are provided on the separate, optional modem cards.

The foregoing disclosure and description of the invention are illustrative and explanatory thereof, and various changes in the size, shape, materials, components, circuit elements, wiring connections and contacts, as well as in the details of the illustrated circuitry and construction and method of operation may be made without departing from the spirit of the invention.

## Claims

1. An option card for coupling to a an I/O bus slot (30) of a computer system, said option card (S) comprising:
means (60) for interfacing with the I/O bus slot for transferring data;
a digital signal processor (70) coupled to said interfacing means for performing a first function;
a daughter board connector (78); and
a daughter board (D) removably connected to said daughter board connector for adding to said option card a second function, characterised in that:
said second function is unrelated to said first function, and includes modem and facsimile capabilities, in that said daughter board comprises:
a CODEC (81) for coupling by said daughter board connector to said digital signal processor;
a data access arrangement (80) coupled to said CODEC;
a phone jack (82) coupled to said data access arrangement for coupling to a phone line; and
wherein said digital signal processor interfaces with said data access arrangement through said CODEC to perform said second function in cooperation with said daughter board.

2. The option card of claim 1, wherein said first function includes audio capabilities.

3. The computer system of claim 1 or claim 2, further comprising memory (72) for storing modem software used for controlling said digital signal processor.

4. A computer system including an option card of any of claims 1 to 3, said computer system including a host bus (22), an I/O bus (28) and an I/O bus slot (30) and a bus controller (26) coupled between said host bus and said I/O bus (28) for interfacing said host bus to the I/O bus, wherein said option card interfacing means (31) is coupled to said I/O bus slot and operates as a slave to the computer system bus controller for transferring data between said option card (S) and the computer system host bus.

5. The computer system of claim 4, wherein said digital signal processor includes means for performing error correction on data received from said daughter board, and further includes means for performing data compression and decompression.

6. A computer system, comprising:
a host bus (22);
an I/O bus (28) including I/O slots (30) for receiving option cards;
a digital signal processor (100, 100') said digital signal processor being coupled either to said host bus (22) or to said I/O bus (28);
means (26) coupled between said host bus and said I/O bus for controlling data transfer between said host and I/O buses; and
an option card (M') not including a digital signal processor, said option card interfacing with a said I/O slot (30) for coupling over said I/O bus to said digital signal processor for performing option card functions requiring the use of said digital signal processor.

7. The computer system of claim 6, wherein the digital signal processor (100, 100') performs functions including audio signal processing functions, and said option card (M') includes data modem and facsimile functions, said digital signal processor communicating with said option card over said I/O bus (28) or said host bus (22) to process data received by and to be transmitted from said option card.

8. The computer system of claim 7, further comprising: a CPU (20) coupled to said host bus (22);
memory (24) coupled to said host bus and loaded with modem software for execution by said CPU; and
wherein said CPU controls data transfer using said data transfer controlling means (26) and indicates to said digital signal processor (100, 100') when said memory contains data received from said option card (M').

9. The computer system of claim 6, wherein said option card (M') performs modem and facsimile functions, and wherein said option card is a modem card comprising:
a CODEC interface device (102);
a data access arrangement (104) coupled to said CODEC interface device; and
a phone jack coupled (106) to said data access arrangement.

10. The computer system of claim 9, wherein said CODEC interface device (102) includes bus slave logic for transferring data between said option card (M') and said host bus (22) as controlled by said data transfer controlling means (26).

11. The computer system of any of claims 6, to 10, wherein said digital signal processor (100, 100') includes means for performing error correction on data received from said option card (M'), and further includes means for performing data compression and decompression.

## Patentansprüche

1. Optionskarte zum Ankoppeln an einen I/O-Bus-Steckplatz (30) eines Computersystems, wobei die Optionskarte (S) umfasst:
Mittel (60) zur Schnittstellenbildung mit dem I/O-Bus-Steckplatz zur Datenübertragung;
einen mit dem Schnittstellenmittel zum Ausführen einer ersten Funktion gekoppelten Digitalsignal-Prozessor (70);
einen Folgeplatinen-Verbinder (78); und
eine entfernbar mit dem Folgeplatinen-Verbinder verbundene Folgeplatine (D), um der Optionskarte eine zweite Funktion hinzuzufügen, **dadurch gekennzeichnet,** dass:
die zweite Funktion nicht auf die erste Funktion bezogen ist und Modem- und Faksimile-Fähigkeiten enthält, wobei die Folgeplatine umfasst:
eine CODEC (81) zum Koppeln mit dem Digitalsignal-Prozessor über den Folgeplatinen-Verbinder;
eine mit dem CODEC gekoppelte Datenzugriff-Anordnung (80);
eine mit der Datenzugriff-Anordnung zur Kopplung mit einer Fernsprechleitung gekoppelte Fernsprechbuchse; und
wobei der Digitalsignal-Prozessor mit der Datenzugriff-Anordnung durch den CODEC zum Ausführen der zweiten Funktion im Zusammenwirken mit der Folgeplatine eine Schnittstelle bildet.

2. Optionskarte nach Anspruch 1, bei der die erste Funktion Audio-Fähigkeiten enthält.

3. Computersystem nach Anspruch 1 oder 2, das weiter einen Speicher (72) zum Speichern von zum Steuern des Digitalsignal-Prozessors eingesetzte Modemsoftware umfasst.

4. Computersystem, das eine Optionskarte nach einem der Ansprüche 1-3 enthält, wobei das Computersystem einen Hostbus (22), einen I/O-Bus (28) und einen I/O-Bus-Steckplatz (30) sowie eine zwischen dem Hosttbus und dem I/O-Bus (28) gekoppelte Bus-Steuerung (26) zur Schnittstellenverbindung für den Hostbus mit dem I/O-Bus enthält, wobei das Optionskarten-Schnittstellenmittel (31) mit dem I/O-Bus-Steckplatz gekoppelt ist und
als ein Folgegerät zu der Computersystem-Bussteuerung zur Übertragung von Daten zwischen der Optionskarte (S) und dem Computersystem-Hostbus arbeitet.

5. Computersystem nach Anspruch 4, bei dem der Digitalsignal-Prozessor Mittel zum Ausführen von Fehlerkorrektur an von der Folgeplatine empfangenen Daten und weiter Mittel zum Ausführen von Daten-Komprimierung und -Dekomprimierung enthält.

6. Computersystem mit:
einem Hostbus (22);
einem I/O-Bus (28) mit I/O-Steckplätzen (30) zur Aufnahme von Optionskarten;
einem Digitalsignal-Prozessor (100, 100'), welcher Digitalsignal-Prozessor entweder mit dem Hostbus (2) oder dem I/O-Bus (28) gekoppelt ist;
zwischen dem Hostbus und dem I/O-Bus gekoppelte Mittel (26) zum Steuern von Datenübertragung zwischen dem Host- und dem I/O-Bus; und
einer Optionskarte (M'), die keinen Digitalsignal-Prozessor enthält, welche Optionskarte für den I/O-Steckplatz (30) eine Schnittstelle bildet zum Ankoppeln des I/O-Buses an dem Digitalsignal-Prozessor, um den Einsatz des Digitalsignal-Prozessors erfordernde Options-kartenfunktionen auszuführen.

7. Computersystem nach Anspruch 6, bei dem der Digitalsignal-Prozessor (100, 100') Funktionen einschließlich Audiosignal-Verarbeitungsfunktionen ausführt und die Optionskarte (M') Datenmodem- und Faksimile-Funktionen enthält, und der Digitalsignal-Prozessor mit der Optionskarte über den I/O-Bus (28) oder den Hostbus (22) kommuniziert, um durch die Optionskarte empfangene und von ihr zu sendende Daten zu verarbeiten.

8. Computersystem nach Anspruch 7, das weiter umfasst: eine mit dem Hostbus (22) gekoppelte CPU (20);
einen mit dem Hostbus gekoppelten und mit durch die CPU auszuführender Modem-Software beladenen Speicher (24); und
wobei die CPU Datenübertragung mit Verwendung des Datenübertragungs-Steuermittels (26) steuert und dem Digitalsignal-Prozessor (100, 100') anzeigt, wenn der Speicher von der Optionskarte (M') empfangene Daten enthält.

9. Computersystem nach Anspruch 6, bei dem die Optionskarte (M') Modem- und Faksimile-Funktionen ausführt, bei dem die Optionskarte eine Modemkarte ist mit:
einem CODEC-Schnittstellengerät (102);
einer mit dem CODEC-Schnittstellengerät gekoppelten Datenzugriffs-Einrichtung (104); und einer mit der Datenzugriffs-Einrichtung gekoppelten Fernsprechbuchse (106).

10. Computersystem nach Anspruch 9, bei dem das CODEC-Schnittstellengerät (102) BusFolgelogik zum Übertragen von Daten zwischen der Optionskarte (M') und dem Hostbus (22) unter Steuerung durch das Datenübertragungs-Steuermittel (26) enthält.

11. Computersystem nach einem der Ansprüche 6 bis 10, bei dem der Digitalsignal-Prozessor (100, 100') Mittel zum Ausführen von Fehlerkorrektur an von der Optionskarte (M') empfangenen Daten und weiter Mittel zum Ausführen von Daten-Komprimierung und -Dekomprimierung enthält.

## Revendications

1. Une carte d'option pour le couplage à un connecteur de bus d'entrée/sortie (30) d'un système informatique, cette carte d'option (S) comprenant :
des moyens (60) pour assurer l'interface avec le connecteur de bus d'entrée/sortie pour transférer des données;
un processeur de signal numérique (70) couplé aux moyens d'interface pour accomplir une première fonction;
un connecteur de carte fille (78); et
une carte fille (D) connectée de façon amovible au connecteur de carte fille pour ajouter une seconde fonction à la carte d'option, caractérisée en ce que :
la seconde fonction n'est pas liée à la première fonction, et comprend des possibilités de modem et de télécopie, et en ce que la carte fille comprend :
un CODEC (81) pour le couplage par le connecteur de carte fille au processeur de signal numérique;
une structure d'accès aux données (80) couplée au CODEC;
un jack téléphonique (82) couplé à la structure d'accès aux données, pour le couplage à une ligne téléphonique; et
le processeur de signal numérique étant couplé à la structure d'accès aux données par l'intermédiaire du CODEC pour accomplir la seconde fonction en coopération avec la carte fille.

2. La carte d'option de la revendication 1, dans laquelle la première fonction comprend des possibilités audio.

3. Le système informatique de la revendication 1 ou de la revendication 2, comprenant en outre une mémoire (72) pour enregistrer un logiciel de modem utilisé pour commander le processeur de signal numérique.

4. Un système informatique comprenant une carte d'option selon l'une quelconque des revendications 1 à 3, ce système informatique comprenant un bus d'hôte (22), un bus d'entrée/sortie (28) et un connecteur de bus d'entrée/sortie (30), et un contrôleur de bus (26) couplé entre le bus d'hôte et le bus d'entrée/sortie (28) pour assurer l'interface entre le bus d'hôte et le bus d'entrée/sortie, dans lequel les moyens d'interface de carte d'option (31) sont couplés au connecteur de bus d'entrée/sortie et fonctionnent comme un esclave par rapport au contrôleur de bus du système informatique, pour transférer des données entre la carte d'option (S) et le bus d'hôte du système informatique.

5. Le système informatique de la revendication 4, dans lequel le processeur de signal numérique comprend des moyens pour effectuer une correction d'erreur sur des données reçues à partir de la carte fille, et comprend en outre des moyens pour effectuer une compression et une décompression de données.

6. Un système informatique, comprenant :
un bus d'hôte (22);
un bus d'entrée/sortie (28) comprenant des connecteurs d'entrée/sortie (30) pour recevoir des cartes d'option;
un processeur de signal numérique (100 , 100'), ce processeur de signal numérique étant couplé soit au bus d'hôte (22), soit au bus d'entrée/sortie (28);
des moyens (26) couplés entre le bus d'hôte et le bus d'entrée/sortie pour commander un transfert de données entre les bus d'hôte et d'entrée/sortie; et
une carte d'option (M') ne comprenant pas un processeur de signal numérique, cette carte d'option étant connectée à un connecteur d'entrée/sortie (30) pour le couplage avec le processeur de signal numérique par le bus d'entrée/sortie, pour accomplir des fonctions de carte d'option exigeant l'utilisation du processeur de signal numérique.

7. Le système informatique de la revendication 6, dans lequel le processeur de signal numérique (100, 100') accomplit des fonctions comprenant des fonctions de traitement de signal audio, et la carte d'option (M') comprend des fonctions de modem de données et de télécopie, le processeur de signal numérique communiquant avec la carte d'option sur le bus d'entrée/sortie (28) ou le bus d'hôte (22), pour traiter des données reçues par la carte d'option et devant être émises par celle-ci.

8. Le système informatique de la revendication 7, comprenant en outre : une unité centrale (20) couplée au bus d'hôte (22);
une mémoire (24) couplée au bus d'hôte et dans laquelle est chargé un logiciel de modem destiné à être exécuté par l'unité centrale; et
dans lequel l'unité centrale commande un transfert de données en utilisant les moyens de commande de transfert de données (26) et indique au processeur de signal numérique (100, 100') le moment auquel la mémoire contient des données reçues à partir de la carte d'option (M').

9. Le système informatique de la revendication 6, dans lequel la carte d'option (M') accomplit des fonctions de modem et de télécopie, et dans lequel la carte d'option est une carte de modem comprenant :
un dispositif d'interface de CODEC (102);
une structure d'accès aux données (104) couplée au dispositif d'interface de CODEC; et
un jack téléphonique (106) couplé à la structure d'accès aux données.

10. Le système informatique de la revendication 9, dans lequel le dispositif d'interface de CODEC (102) comprend une logique d'esclave de bus pour transférer des données entre la carte d'option (M') et le bus d'hôte (22), de la manière commandée par les moyens de commande de transfert de données (26).

11. Le système informatique de l'une quelconque des revendications 6 à 10, dans lequel le processeur de signal numérique (100, 100') comprend des moyens pour effectuer une correction d'erreur sur des données reçues à partir de la carte d'option (M'), et comprend en outre des moyens pour effectuer une compression et une décompression de données.
